Europäisches Patentamt

**European Patent Office**

**Office européen des brevets**

(19)

(11) Veröffentlichungsnummer: **0 373 414**

**A1**

(12) **EUROPÄISCHE PATENTANMELDUNG**

(21) Anmeldenummer: **89121942.0**

(22) Anmeldetag: **28.11.89**

(51) Int. Cl.⁵: **G01F 1/68, G01K 7/16, G01K 13/02, G01P 5/12**

(30) Priorität: **10.12.88 DE 3841637**

(43) Veröffentlichungstag der Anmeldung:
**20.06.90 Patentblatt 90/25**

(84) Benannte Vertragsstaaten:
**CH DE FR GB IT LI**

(71) Anmelder: **GEBR. SCHMIDT FABRIK FUR FEINMECHANIK**
**Feldbergstrasse 1**
**D-7742 St. Georgen/Schwarzwald(DE)**

(72) Erfinder: **Sondergeld, Manfred, Dr.**
**Glasbachweg 18**
**D-7742 St. Georgen/Schwarzwald(DE)**

(74) Vertreter: **Witte, Alexander, Dr.-Ing. et al**
**Witte, Weller & Hilgenfeldt Patent- und Rechtsanwälte Augustenstrasse 7**
**D-7000 Stuttgart 1(DE)**

(54) Verfahren und Vorrichtung zum Messen von fluidischen oder kalorimetrischen Parametern.

(57) Ein Verfahren und eine Vorrichtung dienen zum Messen von fluidischen oder kalorimetrischen Parametern, beispielsweise einer Strömungsgeschwindigkeit, bei dem ein in einer Meßumgebung (12) befindliches Sensorelement (13) auf eine höhere Temperatur oberhalb einer Umgebungstemperatur der Meßumgebung (12) aufgeheizt und der Parameter aus dem Wärmeübergang zwischen Meßumgebung (12) und Sensorelement (13) bestimmt wird. Um Messungen durchführen zu können, deren Ergebnis systematisch unabhängig vom Absolutwert der Umgebungstemperatur und vom Absolutwert der Heizleistung im Sensorelement ist, werden zwei Messungen nacheinander bei unterschiedlichen Temperaturen im stationären Zustand durchgeführt. Die jeweilige Heizleistung in diesen beiden Betriebszuständen wird ermittelt und daraus der Meßparameter bestimmt.

FIG.7

EP 0 373 414 A1

## Verfahren und Vorrichtung zum Messen von fluidischen oder kalorimetrischen Parametern

Die Erfindung betrifft ein Verfahren und eine Vorrichtung zum Messen von fluidischen oder kalorimetrischen Parametern, bei dem bzw. bei der ein mit einer Meßumgebung in thermischem Kontakt befindliches, heizbares, temperaturempfindliches Sensorelement nacheinander auf mindestens zwei verschiedene höhere Temperaturen oberhalb einer Umgebungstemperatur der Meßumgebung aufgeheizt und der Parameter unter Zuhilfenahme der Wärmeübergangsfunktion, definiert als Quotient von Wärmefluß bei der höheren Temperatur und Differenz zwischen der höheren Temperatur und der Umgebungstemperatur für das Sensorelement in Abhängigkeit von dem Parameter, aus dem Wärmeübergang zwischen Meßumgebung und Sensorelement bestimmt wird.

Das erfindungsgemäße Verfahren und die erfindungsgemäße Vorrichtung dienen bevorzugt zur Messung der Geschwindigkeit eines strömenden Mediums, des Volumenstroms oder des Massenstroms eines Mediums, des Füllstandes von Medien oder zur Messung der Wärmeleitfähigkeit, der Wärmekapazität oder des Wärmetransportes.

Aus der DE-OS 37 10 224 sind ein Verfahren und eine Einrichtung zum Bestimmen von Luftmassenströmen bekannt. Dabei wird ein beheizbares temperaturempfindliches Sensorelement, das sich in thermischem Kontakt zur Meßumgebung befindet, periodisch aufgeheizt und abgekühlt. Hierzu wird das beheizbare Element zunächst mit einem Heizstrom beaufschlagt. Die Temperatur des Elementes steigt infolgedessen nach einer exponentialförmigen Funktion an und in entsprechender Weise erhöht sich auch die an dem Element abfallende Spannung. Sobald eine vorgegebene obere Spannungsschwelle erreicht ist, wird der Strom von dem relativ hohen Wert des Heizstromes auf einen wesentlich niedrigeren Wert eines Meßstromes umgeschaltet, mit der Folge, daß die Temperatur nach einer exponentialförmigen Funktion wieder absinkt und auch die Spannung, abgesehen von einem Spannungssprung infolge der Umschaltung des Stromes, ebenfalls entsprechend absinkt. Es wird nun das Zeitintervall vom Umschalten des Stromes bis zum Erreichen eines zweiten vorgegebenen unteren Spannungswertes gemessen, d.h. die Dauer einer Abkühlphase bis hin zu einer vorgegebenen unteren Temperatur. Die Dauer dieser Abkühlphase ist ein Maß für den zu messenden Luftmassenstrom, da die Abkühlung umso schneller erfolgt, je größer der Luftmassenstrom ist.

Aus der US-PS 4 501 145 sind ein Verfahren und eine Vorrichtung zum Messen eines fluidischen Parameters mittels eines in eine Flüssigkeit eingetauchten Sensors bekannt. Bei einer ersten Variante des bekannten Verfahrens wird der Sensor aus einem statischen Gleichgewichtszustand heraus, in dem er sich auf der Temperatur des Umgebungsfluids befindet, mit Hilfe eines kurzzeitigen Heizstrom-Impulses aufgeheizt. Nach dem Abschalten des Heizstrom-Impulses wird der Sensor nur noch mit einem sehr viel kleineren Meßstrom beaufschlagt, der einerseits eine Widerstandsmessung ermöglicht, andererseits den Meßwiderstand des Sensors jedoch nicht merklich aufheizt. Zugleich mit dem Umschalten vom Heizstrom auf den sehr viel kleineren Meßstrom wird ein erster Impuls für eine Zeitmeßeinrichtung erzeugt, der diese Meßeinrichtung startet. Wenn nun die aufgrund des Heizstrom-Impulses angestiegene Temperatur des Sensors wieder abfällt, erkennt eine Diskriminatorschaltung das Erreichen von zwei Schwellwerten der Temperatur bzw. des zugeordneten Widerstandes und löst bei Erreichen der vorgegebenen Schwellwerte wiederum Meßimpulse für die Zeitmeßeinrichtung aus. Am Ende der Messung sind insgesamt drei Meßimpulse erzeugt worden, und die beiden Zeitintervalle zwischen den drei Meßimpulsen sind erfaßt worden. Aus diesen Zeitintervallen läßt sich mit Hilfe bekannter Formeln der Wärmeübergang und daraus der gewünschte fluidische Parameter bestimmen. Bei einer anderen Variante dieses bekannten Verfahrens wird statt eines Sensors mit Heizwiderstand ein Peltier-Element eingesetzt, das sich zunächst ebenfalls auf der Umgebungstemperatur des Fluids befindet. Das Peltier-Element wird nun mittels einer Stromquelle so lange unter Strom gesetzt, bis die "warme" Meßstelle einerseits und die "kalte" Meßstelle andererseits eine vorgegebene Temperaturdifferenz bzw. Spannungsdifferenz erreicht haben. Der Peltier-Strom wird nun abgeschaltet, um anschließend auf die bereits beschriebene Weise mittels Meßimpulsen den zeitlichen Verlauf der Temperaturangleichung bzw. Spannungsangleichung der beiden Meßstellen des Peltier-Elementes zu überwachen und in Abhängigkeit von vorgegebenen Schwellwerten der Spannungsdifferenz entsprechende Zeitintervalle auszumessen.

Ein ganz ähnliches Verfahren ist aus der DE-OS 36 39 666 bekannt. Auch bei diesem bekannten Verfahren wird ein aufheizbarer Meßsensor zunächst mit einem Heizstrom-Impuls großer Stromstärke und anschließend mit einem Meßstrom geringer Stromstärke beaufschlagt, um im Anschluß an das Heizintervall den exponentiellen Abfall des Innenwiderstandes des Meßsensors zu überwachen, indem Zeitintervalle zwischen dem Erreichen vorgegebener Schwellwerte ausgemessen werden.

Bei einem weiteren bekannten Verfahren, wie es in der EP-OS 210 509 beschrieben ist, wird ein Heizstrom-Impuls vorgegebener Amplitude und Dauer auf ein entsprechendes Meßelement gegeben. Zugleich wird alternativ während der Aufheizperiode oder im Anschluß daran die exponentiell ansteigende Aufheizkurve bzw. die exponentiell abfallende Abkühlkurve des Meßelementes bestimmt. Aus der Steigung der jeweiligen Kurve kann die gewünschte Meßgröße abgeleitet werden, weil die Geschwindigkeit des Temperaturanstieges bzw. -abfalles ein Maß für diese Meßgröße ist.

Bei einem weiteren bekannten Verfahren, wie es in der FR-OS 2 487 973 beschrieben ist, wird eine Anordnung verwendet, bei dem in einem fluiddurchströmten Rohr in Strömungsrichtung ein erster Sensor, ein Heizelement und ein zweiter Sensor angeordnet sind. Mit dieser Anordnung kann die Durchflußrate des Fluids gemessen werden, wenn entweder bei konstanter Heizleistung des Heizelementes die Temperaturdifferenz der beiden Sensoren oder umgekehrt bei konstanter Temperaturdifferenz der beiden Sensoren die hierzu einzusetzende Heizleistung ermittelt wird. Dies geschieht bei dem bekannten Verfahren dadurch, daß die Heizleistung ebenfalls mit Heizstrom-Impulsen zugeführt und der exponentielle Verlauf der sich ergebenden Meßspannungen erfaßt wird.

Diese bekannten Verfahren werden als "dynamisches" Verfahren bezeichnet, weil sich die exponentialförmigen Funktionen des Temperaturanstieges bzw. -abfalles jeweils nur abschnittsweise einstellen, ohne daß ein stationärer Endwert der Temperatur bzw. der Spannung (bei jeweils konstantem Strom) erreicht wird.

Aus der DE-OS 37 06 622 sind ein weiteres Verfahren und eine Einrichtung zum Bestimmen des Luftmassenstroms bekannt, bei dem ein temperaturempfindliches Sensorelement mit konstanter elektrischer Heizleistung beaufschlagt wird. Dabei werden Strom und Spannung am beheizbaren Element gemessen, aus den Meßwerten durch Multiplikation die Heizleistung ermittelt und diese auf einen Konstantwert geregelt. Ferner wird durch Division des Spannungs- und des Stromwertes ein momentaner Widerstandswert des beheizbaren Elementes ermittelt, und dieser Wert wird über eine Kennlinie in einen Temperaturwert umgesetzt. Über eine weitere Kennlinie wird aus dem Temperaturwert unter Berücksichtigung der Umgebungstemperatur dann ein Luftmassenwert ermittelt. Dieses weitere bekannte Verfahren wird als "statisches" Verfahren bezeichnet, weil sich das Sensorelement ständig im stationären Gleichgewicht befindet.

Diese bekannten Verfahren und Vorrichtungen sind jedoch mit Nachteilen behaftet.

Bei dem bekannten dynamischen Verfahren befindet sich das Sensorelement, wie erwähnt, in einem thermischen Ungleichgewicht mit der Meßumgebung, weil daß Intervall der am Element abfallenden Spannung (oder alternativ das Zeitintervall) mit Absicht so festgelegt wird, daß sich während des Aufheizens oder des Abkühlens keine stationären Zustände einstellen, um dadurch eine im Vergleich zur thermischen Zeitkonstante des Sensorelementes möglichst kurze Meßzykluszeit zu erreichen. Diese Betriebsart hat zwangsläufig zur Folge, daß die Temperaturverteilung im Sensorelement, der zeitliche Verlauf der Abkühlkurve und damit auch das Meßergebnis von der Einspeisung der Heizgröße, insbesondere des Heizstromes oder der Heizspannung, explizit abhängen und deshalb genaue Konstantspeisungsquellen erforderlich sind.

Dynamische Verfahren und Vorrichtungen der bekannten Art haben ferner den Nachteil, daß das Meßergebnis von der Ausgangstemperatur der Meßumgebung, d.h. der Umgebungstemperatur abhängig ist. Will man bei den dynamischen Verfahren und Vorrichtungen ein von dieser Störgröße unabhängiges Ergebnis erzielen, so sind aufwendige Kompensationsmaßnahmen erforderlich.

Die bekannten statischen Verfahren und Vorrichtungen haben demgegenüber den Nachteil, daß sie mit den üblichen Driftproblemen statischer Verfahren zu kämpfen haben. Insbesondere ist auch bei den statischen Verfahren eine Korrektur des Meßergebnisses im Hinblick auf die Umgebungstemperatur unabdingbar, weil am Meßergebnis selbst nicht erkennbar ist, ob sich die Meßgröße, z.B. der Luftmassenstrom, oder nur die Umgebungstemperatur geändert hat. Zur Kompensation dieses Störeinflusses muß die Umgebungstemperatur gemessen werden. Hierzu ist ein weiteres Sensorelement notwendig, was mit einem zusätzlichen Kostenaufwand verbunden ist.

Der Erfindung liegt daher die Aufgabe zugrunde, ein Verfahren und eine Vorrichtung der eingangs genannten Art dahingehend weiterzubilden, daß Meßergebnisse erhalten werden, die ohne die Notwendigkeit umfangreicher Kompensationsmaßnahmen frei von derartigen Störgrößen, insbesondere frei von einem Einfluß der Einspeisung der Heizgröße und der Umgebungstemperatur sind sowie eine kostengünstige Realisierung zulassen.

Gemäß dem eingangs genannten Verfahren wird diese Aufgabe erfindungsgemäß durch die folgenden Verfahrensschritte gelöst:
- Einstellen eines ersten Betriebszustandes am Sensorelement derart, daß sich das Sensorelement mit der Meßumgebung in einem stationären Temperaturgleichgewicht bei einer ersten vorbestimmten höheren Temperatur befindet;
- Bestimmen eines ersten Wertes der elektrischen Heizleistung im ersten Betriebszustand;
- Einstellen eines zweiten Betriebszustandes am Sensorelement derart, daß sich das Sensorelement mit der Meßumgebung in einem stationären Temperaturgleichgewicht bei einer zweiten vorbestimmten höheren Temperatur befindet;

- Bestimmen eines zweiten Wertes der elektrischen Heizleistung im zweiten Betriebszustand;
- Bestimmen der Differenz des ersten und des zweiten Wertes der Heizleistung;
- Dividieren der Differenz der Werte der Heizleistung durch die Differenz der ersten und zweiten vorbestimmten höheren Temperatur und Vergleichen des Quotienten mit der Wärmeübergangsfunktion zum Bestimmen des Parameters als Zahlenwert.

Gemäß der eingangs genannten Vorrichtung wird die der Erfindung zugrundeliegende Aufgabe durch die folgenden Merkmale gelöst:

- Das Sensorelement wird vorzugsweise mit einem temperaturabhängigen Heizwiderstand gebildet;
- das Sensorelement ist an eine elektrische Versorgungsquelle angeschlossen;
- an das Sensorelement sind Meßwerterfasser zum Erfassen des den Heizwiderstand durchfließenden Stromes und der am Heizwiderstand abfallenden Spannung angeschlossen;
- die Meßwerterfasser sind mit einem Dividierer verbunden;
- der Dividierer ist an einen Eingang eines Vergleichers angeschlossen;
- ein anderer Eingang des Vergleichers ist über einen Umschalter alternativ mit einem ersten Festwertspeicher oder einem zweiten Festwertspeicher verbindbar;
- der Ausgang des Vergleichers ist mit dem Steuereingang der elektrischen Versorgungsquelle verbunden;
- die Meßwerterfasser sind mit einem Multiplizierer verbunden;
-- der Multiplizierer ist in Abhängigkeit von der Stellung des Umschalters alternativ mit einem ersten Zwischenspeicher oder einem zweiten. Zwischenspeicher verbindbar;
- die Zwischenspeicher sind an einen Substrahierer angeschlossen;
- der Subtrahierer ist über eine Wichtungsstufe mit einem Anzeigegerät verbunden.

Die der Erfindung zugrundeliegende Aufgabe wird auf diese Weise vollkommen gelöst, weil durch die Kombination der erfaßten Meßwerte in den beiden Betriebszuständen sich im Endergebnis die Umgebungstemperatur heraushebt. Das Meßergebnis ist somit systematisch frei von einem Einfluß dieser Störgröße. Eine Temperaturkompensation ist mithin nicht erforderlich. Dadurch, daß die Meßwertnahme im stationären Temperaturgleichgewicht erfolgt, ist das Meßergebnis auch unabhängig vom Zeitverlauf der Aufheiz- und Abkühlkurven.

Das Meßergebnis ist ferner unabhängig vom Wert des jeweils verwendeten Heizwiderstandes.

Es ist somit auch unabhängig von Alterungserscheinungen des Heizwiderstandes und von Schwankungen des Stromes und der Spannung.

Die ermittelten Meßwerte sind ferner unabhängig von der Form der Temperaturkennlinie des Sensorelementes und ferner unabhängig von dessen dynamischen Eigenschaften.

Durch die zeitlich aufeinanderfolgende Meßwertnahme in den beiden Betriebszuständen wird eine Multiplex-Messung erreicht, die mit einem einzigen Sensorelement auskommt. Es ergibt sich auf diese Weise eine sowohl kompakte wie auch kostengünstige Lösung, bei der weder exemplare Streuungen noch störende Ortskorrelationen zwischen Meßelement und Referenzelement einen Einfluß haben, wie dies bei Anordnungen mit mehreren Sensorelementen der Fall ist.

Eine bevorzugte Ausgestaltung des erfindungsgemäßen Verfahrens ist gekennzeichnet durch ein

- Einstellen des ersten und des zweiten Betriebszustandes mittels eines Regelkreises, in dem der Quotient der Ist-Werte von Spannung und Strom an einem temperaturabhängigen Widerstand des Sensorelementes mit dem der vorgegebenen höheren Temperatur entsprechenden vorgegebenen Widerstandswert des temperaturabhängigen Widerstandes verglichen wird und die Differenz zum Nachstellen des Betriebszustandes dient.

Bei alternativen Ausführungsbeispielen der Erfindung kann der temperaturabhängige Widerstand entweder ein separater Meßwiderstand sein, der sich vorzugsweise auf demselben Chip wie der Heizwiderstand des Sensorelementes befindet. Besonders bevorzugt ist jedoch eine Ausführungsform der Erfindung, bei der der Heizwiderstand selbst als temperaturabhängiger Widerstand eingesetzt wird. Es ergibt sich auf diese Weise ein Ein-Element-Sensor mit Eigenheizung, bei dem sich alle relevanten Meßvorgänge an ein- und demselben Ort im Sensorelement abspielen.

Bevorzugt wird zum Nachstellen des Betriebszustandes der Strom durch den Heizwiderstand nachgestellt, es kann aber auch die Spannung am Heizwiderstand nachgestellt werden.

Durch diese Regelung ergibt sich eine vorteilhafte kurze Meßzykluszeit. Die Einstellzeitkonstante für die Aufheiz- und Abkühlphase ist dabei um den Verstärkungsfaktor der Regelschleife kleiner als die thermische Zeitkonstante des Sensorelementes. Die Verwendung einer Regelung ermöglicht es nämlich, den Heizwiderstand zunächst mit einer sehr hohen Heizleistung schnell aufzuheizen und den Heizvorgang dann geregelt wieder "abzubremsen", bis der gewünschte stationäre Endwert erreicht ist. Man braucht also im Rahmen der vorliegenden Erfindung nicht abzuwarten, bis ein exponentieller Temperaturverlauf sich von selbst mit der jeweiligen Zeitkonstante hinreichend genau an den Endwert angenähert hat. Auf diese Weise lassen sich extrem kurze Meßzeiten erzielen, was gerade bei Meßverfahren, bei denen eine Temperaturmessung eine Rolle spielt, von zentraler Bedeutung ist. Der in diesem Zusammenhang eingesetzte Regler wird auch als "Festwertregler" nach dem "BCTR-Verfahren" ("Bistabile Konstant-Temperaturregelung") bezeichnet.

Ein weiteres besonders bevorzugtes Ausführungsbeispiel des erfindungsgemäßen Verfahrens zeichnet sich dadurch aus, daß die Umgebungstemperatur aus den Werten der Heizleistung und den vorbestimmten höheren Temperaturen bestimmt wird.

Diese Maßnahme hat den Vorteil, daß das erfindungsgemäße Verfahren bzw. die hierfür eingesetzten Vorrichtungen zugleich dazu benutzt werden können, um auch die oftmals ebenfalls interessierende Umgebungstemperatur zu bestimmen, ohne daß wesentliche zusätzliche Maßnahmen hierzu erforderlich sind.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematisierte Anordnung zum Messen von fluidischen oder kalorimetrischen Parametern;

Fig. 2 ein Temperatur-Zeit-Diagramm zur Erläuterung von Verfahren und Vorrichtungen nach dem Stande der Technik;

Fig. 3 ein Temperatur-Zeit-Diagramm zur Erläuterung von erfindungsgemäßen Verfahren und Vorrichtungen;

Fig. 4 ein Diagramm, darstellend eine Wärmeübergangsfunktion;

Fig. 5 und 6 Ausführungsformen einer erfindungsgemäßen Vorrichtung mit Mikrocontroller oder Signalprozessor mit zwei alternativen Lösungen zur elektrischen Speisung des Sensorelementes nach der Erfindung;

Fig. 7 ein Blockschaltbild einer erfindungsgemäßen Vorrichtung zur Durchführung des erfindungsgemäßen Verfahrens.

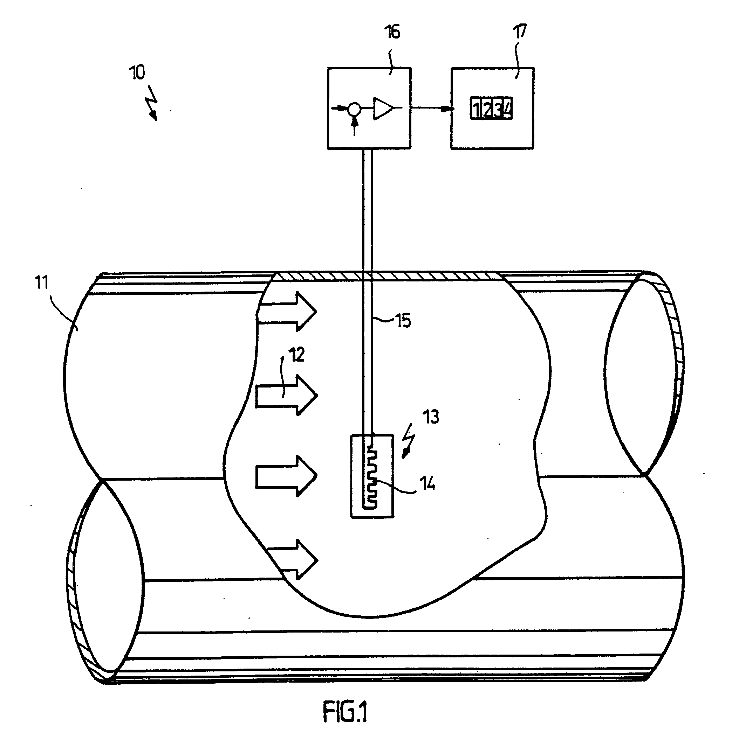

In Fig. 1 bezeichnet 10 generell eine Meßanordnung einer im Rahmen der vorliegenden Erfindung interessierenden Art.

Durch ein Rohr 11 wird ein Mediumstrom 12 geleitet, beispielsweise ein Gas oder eine Flüssigkeit. Der Mediumstrom 12 beaufschlagt ein heizbares, temperaturempfindliches Sensorelement 13, das einen Heizwiderstand 14 enthält. Das Sensorelement 13 ist über eine Leitung 15 mit einer Meß- und Regelschaltung 16 verbunden. Die Schaltung 16 ist ihrerseits an ein Anzeigegerät 17 angeschlossen.

Mit der Meßanordnung 10 ist es möglich, die Geschwindigkeit des Mediumstroms 12, dessen Volumenstrom oder Massenstrom zu erfassen. Es versteht sich jedoch, daß dies lediglich als Beispiel zu verstehen ist, und daß die vorliegende Erfindung auch bei anderen Meßproblemen einsetzbar ist. Da im Rahmen der vorliegenden Erfindung vom Wärmeübergang zwischen dem heizbaren Sensorelement 13 und dessen Umgebung Gebrauch gemacht wird, kann die vorliegende Erfindung auch zur Messung des Füllstandes von Flüssigkeiten und anderen Medien eingesetzt werden, die je nach Füllstand das Sensorelement 13 mit entsprechendem Wärmeübergang umgeben oder auch nicht. Außerdem kann die vorliegende Erfindung vorteilhaft zur Messung der Wärmeleitfähigkeit, der Wärmekapazität oder des Wärmetransportes eingesetzt werden, wenn das Sensorelement 13 beispielsweise aus einem ersten zu untersuchenden Werkstoff und die Umgebung aus einem zweiten zu untersuchenden Werkstoff besteht und Wechselwirkungen zwischen diesen Werkstoffen bestimmt werden sollen.

Bei der Meßanordnung 10 gemäß Fig. 1 wird das Sensorelement 13 auf eine Temperatur $\vartheta$ aufgeheizt, die oberhalb der Umgebungstemperatur $\vartheta_0$ des Mediumstroms 12 liegt. Für den Wärmefluß $\dot{Q}$ bei der höheren Temperatur $\vartheta$ gilt dann:

$$\dot{Q}(\vartheta) = G(w)(\vartheta - \vartheta_0)$$

wo $G(w)$ die Wärmeübergangsfunktion ist, die die Abhängigkeit von dem jeweils zu messenden Parameter w in Anbetracht der speziellen Konfiguration der Meßanordnung 10 angibt.

Soll beispielsweise der Meßparameter w die Strömungsgeschwindigkeit des Mediumstroms 12 sein, so gilt in diesem Falle für die Wärmeübergangsfunktion $G(w)$ das Strömungsgesetz:

$$G(w) = A \alpha_0 (1 + \vartheta w^{1/2})$$

wo A die Wärmekontaktfläche, $\alpha_0$ die Wärmeübergangszahl zwischen Sensorelement 13 und Mediumstrom 12 bei ruhendem Mediumstrom 12 und $\vartheta$ der sogenannte kinematische Konvektionsfaktor ist, d.h. eine Konstante, in die die Geometrie der Meßanordnung 10, die Dichte des Mediumstroms 12, dessen Viskosität sowie dessen Wärmeleitfähigkeit und spezifische Wärmekapazität bei der Messung eingehen.

Will man nun einen speziellen Parameter w bestimmen, so muß zunächst die jeweilige Wärmeübergangsfunktion $G(w)$ der jeweiligen Meßanordnung nach dem Meßparameter w aufgelöst und dann aus der weiter oben angegebenen Beziehung zwischen Wärmefluß $\dot{Q}$, Wärmeübergangsfunktion

G (w) und Temperaturen $\vartheta$, $\vartheta_0$ der Parameter w als Zahlenwert bestimmt werden.

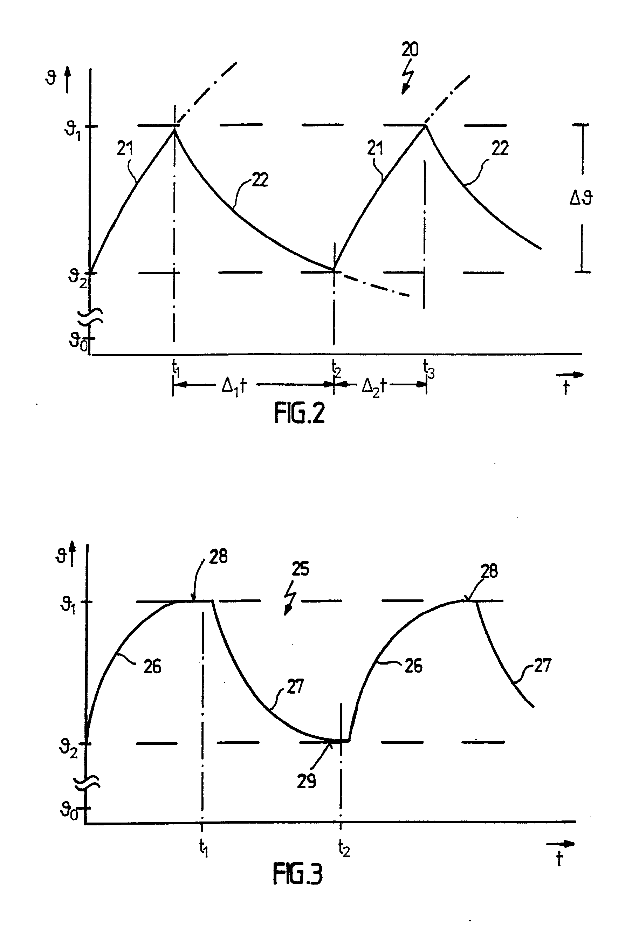

Bei bekannten Meßanordnungen geht man in einer Weise vor, wie dies in Fig. 2 mit einem ersten Verlauf 20 für die Temperatur $\vartheta$ des Sensorelementes 13 in Abhängigkeit von der Zeit t aufgetragen ist.

Bei einer ersten Variante des Standes der Technik wird ein vorbestimmtes Temperaturintervall $\Delta\vartheta$ vorgegeben, d.h. eine Differenz zwischen einer hoheren Temperatur $\vartheta_1$ und einer tieferen Temperatur $\vartheta_2$, die jedoch beide weit oberhalb der Umgebungstemperatur $\vartheta_0$ des Mediumstromes 12 liegen. Es wird nun alternativ eine elektrische Energiequelle an den Heizwiderstand 14 geschaltet bzw. von diesem abgeschaltet, so daß sich die in Fig. 2 erkennbaren Phasen 21 für das Aufheizen und 22 für das Abkühlen des Sensorelementes 13 ergeben. Die Temperaturen $\vartheta_1$ und $\vartheta_2$ können in diesem Falle beispielsweise als vorgegebene Thermospannungen eines im Sensorelement 13 enthaltenen Thermoelementes vorgegeben werden.

Wird beispielsweise zum Zeitpunkt $t_1$ die elektrische Energie vom Heizwiderstand 14 abgeschaltet, so folgt der erste Verlauf 20 der Kühlphase 22 bis zum Zeitpunkt $t_2$, an dem die untere Temperatur $\vartheta_2$ erreicht ist. Es schließt sich nun nach dem Wiedereinschalten der elektrischen Energie eine Heizphase 21 an, bis die höhere Temperatur $\vartheta_1$ zum Zeitpunkt $t_3$ erreicht ist. Die hierzu durchmessenen Zeitintervalle für das Abkühlen betragen $\Delta_1 t$ für die Kühlphase 22 bzw. $\Delta_2 t$ für die Heizphase 21.

Bei vorgegebenem Temperaturintervall $\Delta\vartheta$ läßt sich nun aus den Zeitintervallen $\Delta_1 t$ und $\Delta_2 t$ auf die oben erläuterte Weise für eine bestimmte Meßanordnung 10 der jeweilige Meßparameter w als Zahlenwert bestimmen.

Aus Fig. 2 folgt unmittelbar, daß bei einer anderen Variante des Standes der Technik ebensogut umgekehrt verfahren werden kann, indem die Zeitintervalle $\Delta_1 t$ und $\Delta_2 t$ fest vorgegeben und dann die Temperaturen $\vartheta_1$ und $\vartheta_2$ als Meßwerte bestimmt werden, die sich am Ende der Heizphase 21 bzw. der Kühlphase 22 im Sensorelement 13 einstellen.

Aus Fig. 2 folgt ferner unmittelbar, daß das Meßergebnis direkt von dem Betrag der jeweiligen Heizleistung und auch von der Umgebungstemperatur $\vartheta_0$ abhängt.

Im Rahmen der vorliegenden Erfindung macht man sich nun folgende Überlegung zunutze;

Wenn man für das Sensorelement 13 zwei Temperaturen $\vartheta_1$ und $\vartheta_2$ als Festwerte vorgibt, bei deren Erreichen sich ein stationärer Zustand einstellt, so beträgt der Wärmefluß $\dot{Q}(\vartheta)$ in diesen beiden stationären Zuständen bei den Temperaturen $\vartheta_1$ und $\vartheta_2$:

$$\dot{Q}(\vartheta_1) = G(w)(\vartheta_1 - \vartheta_0)$$
$$\dot{Q}(\vartheta_2) = G(w)(\vartheta_2 - \vartheta_0)$$

entsprechend der weiter oben angegebenen Beziehung. Da ein stationäres Gleichgewicht bei den Temperaturen $\vartheta_1$ und $\vartheta_2$ erreicht wird, gilt bei Erreichen dieses Gleichgewichtes, daß der aus dem Sensorelement 13 in den Mediumstrom 12 übergehende Wärmefluß $\dot{Q}$ gerade so groß ist wie die stationär zugeführte Heizleistung P;

$$\dot{Q}(\vartheta_1) = P_1$$
$$\dot{Q}(\vartheta_2) = P_2$$

Bildet man nun die Differenz dieser Werte der Heizleistung so ergibt sich:

$$\Delta P = G(w)(\vartheta_1 - \vartheta_2)$$

woraus man erkennt, daß der Differenzwert $\Delta P$ unabhängig von der Umgebungstemperatur $\vartheta_0$ ist und bei fest vorgegebenen Werten für die Temperatur $\vartheta_1$ und $\vartheta_2$ a nur noch vom Meßparameter w abhängt.

Bestimmt man in den beiden Betriebszuständen mit stationärem Gleichgewicht bei der Temperatur $\vartheta_1$ bzw. $\vartheta_2$ die Heizleistung $P_1$ bzw. $P_2$, so erhält man eine Meßvorschrift für die Differenz $\Delta P$:

$$\Delta P = (U \cdot I)_1 - (U \cdot I)_2$$

und kann hieraus durch Gleichsetzen mit der vorgenannten Beziehung den Meßparameter w unabhängig von der Umgebungstemperatur $\vartheta_0$ bestimmen.

Fig. 3 zeigt hierzu einen zweiten Verlauf 25, der ähnlich demjenigen der Fig. 2 ist, bei dem jedoch sowohl die Heizphasen 26 wie auch die Kühlphasen 27 in einen oberen Bereich 28 bzw. einen unteren Bereich 29 in einen stationären Zustand übergehen, anders als dies beim Stand der Technik gemäß Fig. 2 der Fall ist, wo an den Umkehrpunkten des Verlaufes 20 keine stationären Zustände herrschen.

Beim zweiten Verlauf 25 gemäß Fig. 3 wird erfindungsgemäß zu den Zeitpunkten $t_1$ und $t_2$ die jeweils vorliegende Heizleistung $P_1$ bzw. $P_2$ gemessen, um auf die oben beschriebene Weise den Meßparameter w als Zahlenwert zu bestimmen.

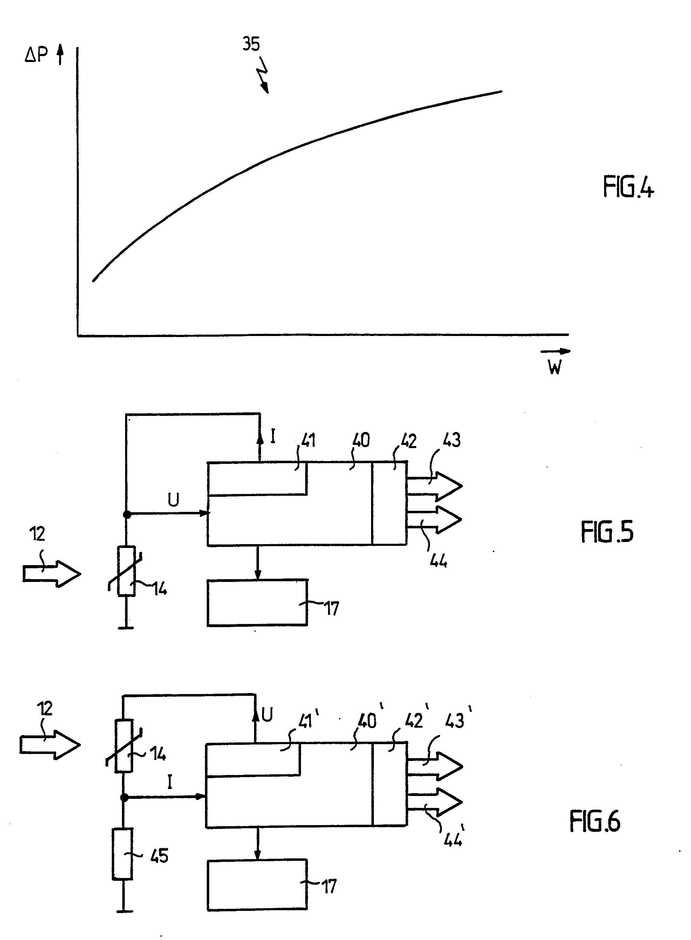

Hierzu benötigt man die Abhängigkeit der Differenz $\Delta P$ vom Meßparameter w, die in Fig. 4 für einen bestimmten Beispielsfall als dritter Verlauf 35 dargestellt ist. Dieser dritte Verlauf 35 ist, wie erläutert, abhängig von der Wärmeübergangsfunktion G(w) und damit von der jeweiligen Konfiguration der Meßanordnung 10 hinsichtlich Geometrie, beteiligten Werkstoffen und deren physikalischen Eigenschaften.

Aus den beiden Zustandsgleichungen für $P_1$, $P_2$ läßt sich neben dem Parameter w zusätzlich auch die Umgebungstemperatur $\vartheta_0$ bestimmen. Durch entsprechendes Umformen der Gleichungen erhält man für die Umgebungstemperatur $\vartheta_0$ die Beziehung:

$$\vartheta_0 = \vartheta_2(P_1/\Delta P) - \vartheta_1(P_2/\Delta P)$$

Diese Beziehung ist vom Parameter w explizit unabhängig und somit die Bestimmungsgleichung für die Umgebungstemperatur $\vartheta_0$, wobei die beiden höheren Temperaturen $\vartheta_1$, $\vartheta_2$ fest vorgegeben sind.

Zur Bestimmung der Heizleistung P im Heizwiderstand 14 kann man sich alternativ zweier Anordnungen bedienen, wie sie beispielhaft in den Fig. 5 und 6 dargestellt sind.

Beim Ausführungsbeispiel der Fig. 5 ist ein Signalprozessor oder Mikrocontroller 40 vorgesehen, der mit einer zeitdiskreten digitalen Regeleinrichtung 41 versehen ist. Die Regeleinrichtung 41 erzeugt einen Ausgangsstrom I, mit dem der Heizwiderstand 14 durchströmt wird. Die am Heizwiderstand 14 infolgedessen abfallende Spannung U wird dem Prozessor 40 als Eingangsgröße zugeführt. Der Prozessor 40 ist über eine Bus-Schnittstelle 42 mit einer Meßdatenleitung 43 und einer Steuerleitung 44 verbunden, um Meßwerte für w und $\vartheta_0$ zu geben und beispielsweise periphere Stellglieder anzusteuern. Das Anzeigegerät 17 kann unmittelbar an den Prozessor 40 angeschlossen sein.

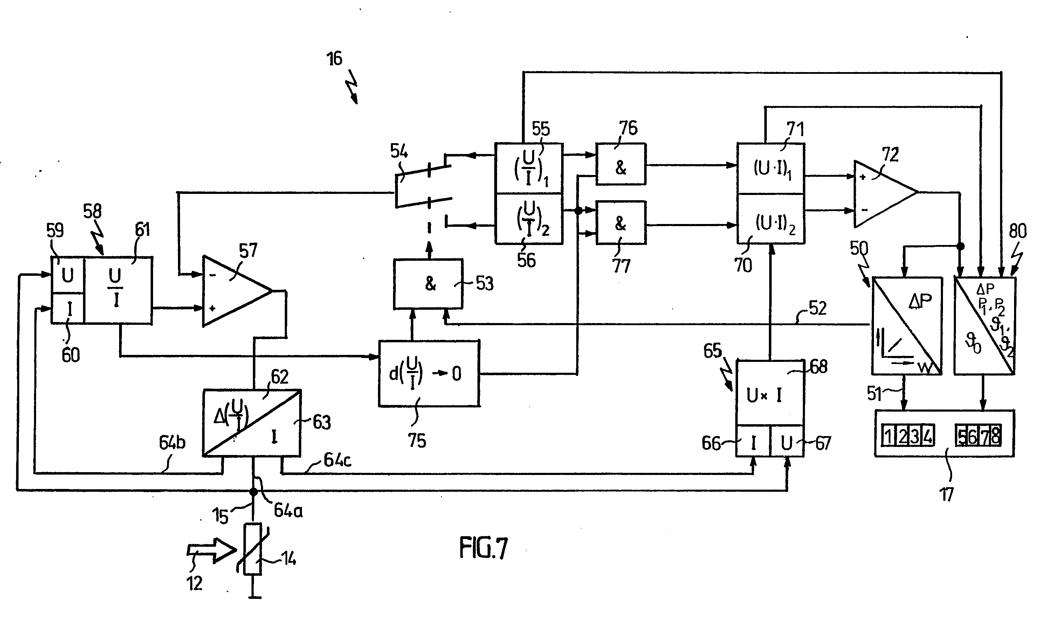

Die Wirkungsweise der Anordnung gemäß Fig. 5 wird weiter unten anhand des Blockschaltbildes der Fig. 7 noch näher erläutert werden.

Alternativ dazu zeigt Fig. 6 eine ähnliche Anordnung, die sich von derjenigen der Fig. 5 im wesentlichen nur dadurch unterscheidet, daß die digitale Regeleinrichtung 41' als Ausgangsgröße eine Spannung U erzeugt, die an einen Spannungsteiler gelegt wird, der aus dem Heizwiderstand 14 und einem Festwiderstand 45 besteht. Als Meßsignal wird der durch den Spannungsteiler 14, 45 fließende Strom I am Festwiderstand 45 abgenommen und dem Prozessor 40' zugeführt. Die übrigen Elemente entsprechen denjenigen der Fig. 5 und sind lediglich mit einem Apostroph versehen.

Fig. 7 zeigt ein Blockschaltbild eines Ausführungsbeispiels einer erfindungsgemäßen Meß- und Regelschaltung 16, wie sie beispielsweise bei der Meßanordnung 10 gemäß Fig. 1 verwendet werden kann.

Eine Wichtungsstufe 50, in der als Kennlinie oder Kennfeld der dritte Verlauf 35 gemäß Fig. 4 abgespeichert ist, ist mit einem ersten Ausgang 51 an das Anzeigegerät 17 angeschlossen.

Ein zweiter Ausgang 52 ist mit einem Eingang eines ersten Steuergliedes 53 verbunden, das vorzugsweise als UND-Gatter ausgebildet ist. Das erste Steuerglied 53 steuert einen Umschalter 54. Der Umschalter 54 gestattet es, wahlweise einen ersten Festwertspeicher 55 oder einen zweiten Festwertspeicher 56 an einen invertierenden Eingang eines Vergleichers bzw. Subtrahierers 57 zu schalten. Dessen nicht-invertierender Eingang ist mit einer ersten Rechenstufe 58 verbunden, die eingangsseitig aus zwei Meßwerterfassern 59, 60 und ausgangsseitig aus einem Dividierer 61 besteht.

Der Ausgang des Vergleichers 57 steuert über die Steuerstufe 62 eine variable Stromquelle 63, die drei Ausgänge 64a, 64b und 64c aufweist.

Der erste Ausgang 64a ist über die Leitung 15 mit dem temperaturabhängigen Heizwiderstand 14 und über weitere Leitungen mit dem ersten Meßwerterfasser 59 der ersten Rechenstufe 58 sowie einem vierten Meßwerterfasser 67 einer zweiten Rechenstufe 65 verbunden. Der zweite Ausgang 64b ist an den zweiten Meßwerterfasser 60 der ersten Rechenstufe 58 und der dritte Ausgang 64c ist an einen dritten Meßwerterfasser 66 der zweiten Rechenstufe 65 angeschlossen.

Der Ausgang der zweiten Rechenstufe 65 wird durch einen Multiplizierer 68 gebildet. Dieser ist wahlweise, und zwar in Abhängigkeit von der Stellung des Umschalters 54, mit einem ersten Zwischenspeicher 70 oder einem zweiten Zwischenspeicher 71 verbindbar. Deren Ausgänge sind auf einen Subtrahierer 72 geführt, der wiederum mit einem Eingang der Wichtungsstufe 50 verbunden ist.

Ein weiterer Ausgang des Dividierers 61 der ersten Rechenstufe 58 steuert einen Grenzwertdetektor 75, dessen eine Ausgang an einen weiteren Eingang des ersten Steuergliedes 53 geführt ist, der den Umschalter 54 betätigt. Ein weiterer Ausgang des Grenzwertdetektors 75 ist auf Eingänge eines zweiten Steuergliedes 76 und eines dritten Steuergliedes 77 geführt, deren weitere Eingänge mit den Steuerausgängen des ersten Festwertspeichers 55 bzw. des zweiten Festwertspeichers 56 verbunden sind. Die Ausgänge der Steuerglieder 76, 77 steuern die Zwischenspeicher 70, 71 derart an, daß die Meßwerte vom Ausgang des Multiplizierers 78 jeweils in den Zwischenspeicher 70, 71 eingespeichert werden der dem Festwertspeicher 55 oder 56 entspricht, der über den Umschalter 54 an den Subtrahierer 57 angeschlossen ist.

In Fig. 7 ist ferner mit 80 eine weitere Wichtungsstufe bezeichnet, die eingangsseitig an die Festwertspeicher 55, 56, die Zwischenspeicher 70, 71 sowie den Subtrahierer 72 angeschlossen ist. Ein Ausgang der weiteren Wichtungsstufe 80 ist gleichfalls an das Anzeigegerät 17 angeschlossen, wo eine zweite Ziffernanzeige zur numerischen Darstellung des Ausgangssignales der weiteren Wichtungsstufe 80 vorgesehen ist. Die vorstehend erläuterten Elemente dienen zur Ermittlung und Anzeige der Umgebungstemperatur $\vartheta_0$, wie dies weiter oben im einzelnen beschrieben wurde.

Die Wirkungsweise der Anordnung gemäß Fig. 7 ist wie folgt:

In den Festwertspeichern 55, 56 sind die Tem-

peraturen $\vartheta_1$ und $\vartheta_2$ der Fig. 3 als Festwerte eingegeben. Da die Abhängigkeit des Widerstandswertes R des Heizwiderstandes 14 von der Temperatur $\vartheta$ bekannt ist, können die Temperaturwerte $\vartheta_1$ und $\vartheta_2$ auch als Widerstandswerte oder, über das Ohm'sche Gesetz als Quotienten $(U/I)_1$ bzw. $(U/I)_2$ von Spannung U und Strom I ausgedrückt werden. Wenn zunächst der höhere Temperaturwert $\vartheta_1$ angesteuert werden soll, befindet sich der Umschalter 54 in der in Fig. 7 eingezeichneten Stellung. Der im ersten Festwertspeicher 55 abgelegte Festwert $(U/I)_1$ gelangt somit an den invertierenden Eingang des Subtrahierers 57. An dessen nicht-invertierendem Eingang liegt ein Quotient U/I als Ausgang des Dividierers 61 an. Dieser Quotient ist der Quotient der aktuellen Werte von Spannung U und Strom I am Heizwiderstand 14, die als Meßwerte den Meßwerterfassern 59 und 60, also einem Spannungsmesser und einem Strommesser zugeführt wurden.

Wenn die gewünschte Temperatur $\vartheta_1$ noch nicht erreicht wurde, ist das Ausgangssignal des Dividierers 61 kleiner als das Signal aus dem ersten Festwertspeicher 55, mit der Folge, daß der Widerstand/Strom-Umsetzer 63 einen höheren Strom I über seinen ersten Ausgang 64a und die Leitung 15 in den Heizwiderstand 14 einspeist.

Die aus den Elementen 57, 58, 63 und 14 gebildete Regelschleife stellt den Strom I durch den Heizwiderstand 14 solange nach, bis der gewünschte Endwert $\vartheta_1$ erreicht wird. Der Strom I kann dabei zunächst mit einem sehr hohen Wert eingestellt werden, so daß das Regelspiel in der Regelschleife innerhalb einer minimalen Zeit abläuft..

Die Meßwerte der Spannung U und des Stroms I werden parallel in der zweiten Rechenstufe 65 über einen Strommesser und einen Spannungsmesser, nämlich die Meßwerterfasser 66 und 67 erfaßt und im Multiplizierer 68 miteinander multipliziert, so daß sich ein Ausdruck $(UI)_1$, d.h. die elektrische Heizleistung $P_1$ ergibt.

Solange jedoch noch kein stationärer Zustand erreicht wird, wie er durch den oberen Bereich 28 in Fig. 3 gekennzeichnet ist, soll dieser Wert $(UI)_1$ noch nicht weiter verarbeitet werden.

Um das Erreichen des Zustandes zu erkennen, in dem ein stationäres Gleichgewicht herrscht bzw. um eine hinreichend genaue Annäherung an diesen Zustand zu ermitteln, wird über einen weiteren Ausgang des Dividierers 61 das jeweilige Inkrement des Quotienten U/I abgenommen und in einem Grenzwertdetektor 75 verarbeitet.

Eine Annäherung des Inkrementes an den Wert Null, kann beispielsweise durch Vergleich des Inkrementes mit einem vorgegebenen unteren Schwellwert in einem Komparator erkannt werden.

In beiden genannten Fällen wird bei einer hinreichend genauen Annäherung an den stationären Grenzwert vom Grenzwertdetektor 75 ein Ausgangssignal erzeugt. Dieses Ausgangssignal bewirkt zum einen über die Steuerglieder 76 und 77, daß der im Multiplizierer 68 gebildete Wert für die aktuelle Heizleistung in den zweiten Zwischenspeicher 71 eingeschrieben wird, andererseits bewirkt das Ausgangssignal des Grenzwertdetektors 75 aber auch, daß der Umschalter 54 umgeschaltet und der Heizwiderstand 14 auf den unteren Temperaturwert $\vartheta_2$ herunter geregelt wird.

Das Regelspiel der Elemente der Fig. 7 wiederholt sich nun in entsprechender Weise, bis der Grenzwertdetektor 75 das Erreichen des unteren Grenzwertes bzw. eine hinreichend genaue Annäherung daran erkennt.

Wurden auf diese Weise sowohl eine Heizphase 26 wie auch eine Kühlphase 27 (Fig. 3) durchlaufen, sind in den Zwischenspeichern 71 und 70 die jeweiligen stationären Werte für die Heizleistung $P_1$ bzw. $P_2$ abgelegt. Aus diesen Werten wird im Subtrahierer 72 deren Differenz gebildet und die Differenz wird dann der Wichtungsstufe 50 zugeführt, damit dort über die Kennlinie $\Delta P(w)$ der jeweiligen Wärmeübergangsfunktion $G(w)$ der Meßparameter w als Zahlenwert am ersten Ausgang 51 zur Verfügung steht.

Bei der vorstehenden Schilderung wurde im Rahmen der Regelein richtung 57, 61, 63 eine Regelung mit Stromspeisung beschrieben, d.h. der Fall der Fig. 5, bei dem der Strom I nachgestellt und die sich jeweils einstellende Spannung U als Meßwert erfaßt wurde. Es versteht sich jedoch, daß das Blockschaltbild der Fig. 7 auch dahingehend abgewandelt werden kann, daß statt einer Stromspeisung eine Spannungsspeisung des Heizwiderstandes 14 verwendet wird, wie sie in Fig. 6 dargestellt ist.

Es versteht sich ferner, daß die vorstehend beschriebenen Komponenten in analoger Technik ausgeführt sein können. Hierzu werden Multiplizier- und Dividierglieder, Differenzverstärker, analoge Sollwertgeber, Speicherelemente und ein Regler mit z.B. PI- oder PID-Regelcharakteristik benötigt.

Zur Minimierung des Schaltungsaufwandes wird die Meß- und Regelschaltung 16 jedoch vorzugsweise in digitaler Technik ausgeführt, wie dies bereits zu den Fig. 5 und 6 angedeutet wurde. Hierzu wird ein Mikrocontroller oder ein Signalprozessor benötigt, der mit einem adaptiven Regelalgorithmus ausgestattet ist.

## Ansprüche

1. Verfahren zum Messen von fluidischen oder kalorimetrischen Parametern (w), bei dem ein mit einer Meßumgebung (12) in thermischem Kontakt befindliches, heizbares, temperaturempfindliches Sensorelement (13) nacheinander auf mindestens zwei verschiedene höhere Temperaturen ($\vartheta_1$, $\vartheta_2$) oberhalb einer Umgebungstemperatur ($\vartheta_0$) der Meßumgebung (12) aufgeheizt und der Parameter (w) unter Zuhilfenahme der Wärmeübergangsfunktion (G(w)), definiert als Quotient von Wärmefluß ($\dot{Q}$) bei der höheren Temperatur ($\vartheta_1$, $\vartheta_2$) und Differenz zwischen der höheren Temperatur ($\vartheta_1$, $\vartheta_2$) und der Umgebungstemperatur ($\vartheta_0$) für das Sensorelement (13) in Abhängigkeit von dem Parameter (w), aus dem Wärmeübergang zwischen Meßumgebung (12) und Sensorelement (13) bestimmt wird, mit den Verfahrensschritten:

- Einstellen eines ersten Betriebszustandes am Sensorelement (13) derart, daß sich das Sensorelement (13) mit der Meßumgebung in einem stationären Temperaturgleichgewicht bei einer ersten vorbestimmten höheren Temperatur ($\vartheta_1$) befindet;
- Bestimmen eines ersten Wertes der elektrischen Heizleistung ($P_1$) im ersten Betriebszustand;
- Einstellen eines zweiten Betriebszustandes am Sensorelement (13) derart, daß sich das Sensorelement (13) mit der Meßumgebung in einem stationären Temperaturgleichgewicht bei einer zweiten vorbestimmten höheren Temperatur ($\vartheta_2$) befindet;
- Bestimmen eines zweiten Wertes der elektrischen Heizleistung ($P_2$) im zweiten Betriebszustand;
- Bestimmen der Differenz ($\Delta P$) des ersten und des zweiten Wertes der Heizleistung ($P_1$, $P_2$);
- Dividieren der Differenz ($\Delta P$) der Werte der Heizleistung ($P_1$, $P_2$) durch die Differenz ($\vartheta_1 - \vartheta_2$) der ersten und zweiten vorbestimmten höheren Temperatur ($\vartheta_1$, $\vartheta_2$) und Vergleichen des Quotienten mit der Wärmeübergangsfunktion (G(w)) zum Bestimmen des Parameters (w) als Zahlenwert.

2. Verfahren nach Anspruch 1, gekennzeichnet durch:

- Einstellen des ersten und des zweiten Betriebszustandes mittels eines Regelkreises (57 bis 64), in dem der Quotient (U/I) der Ist-Werte von Spannung (U) und Strom (I) an einem temperaturabhängigen Widerstand des Sensorelementes (13) mit dem den beiden vorgegebenen höheren Temperaturen ($\vartheta_1$, $\vartheta_2$) entsprechenden vorgegebenen Widerstandswerten des temperaturabhängigen Widerstandes verglichen wird und die Differenz ($\Delta$ (U/I)) zum Nachstellen des Betriebszustandes dient.

3. Verfahren nach Anspruch 2, dadurch gekennzeichnet, daß die Ist-Werte von Strom (I) und Spannung (U) an einem temperaturabhängigen Heizwiderstand (14) ausgewertet werden.

4. Verfahren nach Anspruch 2 oder 3, dadurch gekennzeichnet, daß zum Nachstellen des Betriebszustandes der Strom (I) durch den Heizwiderstand (14) nachgestellt wird.

5. Verfahren nach Anspruch 2 oder 3, dadurch gekennzeichnet, daß zum Nachstellen des Betriebszustandes die Spannung (U) am Heizwiderstand (14) nachgestellt wird.

6. Verfahren nach einem oder mehreren der Ansprüche 1 bis 5, dadurch gekennzeichnet, daß vom ersten in den zweiten Betriebszustand oder vom zweiten in den ersten Betriebszustand dann umgeschaltet wird, wenn die Temperatur ($\vartheta$) am Sensorelement (13) sich um ein vorgegebenes Maß an die erste oder zweite vorbestimmte höhere Temperatur ($\vartheta_1$, $\vartheta_2$) angenähert hat.

7. Verfahren nach den Ansprüchen 2 und 6, dadurch gekennzeichnet, daß die Annäherung an die erste vorbestimmte höhere Temperatur ($\vartheta_1$) oder an die zweite vorbestimmte höhere Temperatur ($\vartheta_2$) dadurch erkannt wird, daß die Annäherung der Änderung (d(U/I)) des Quotienten der Ist-Werte von Spannung (U) und Strom (I) an den Wert Null überwacht wird.

8. Verfahren nach einem oder mehreren der Ansprüche 1 bis 7, dadurch gekennzeichnet, daß die Umgebungstemperatur ($\vartheta_0$) aus den Werten der Heizleistung ($P_1$, $P_2$) und den vorbestimmten höheren Temperaturen ($\vartheta_1$, $\vartheta_2$) bestimmt wird.

9. Vorrichtung zum Messen von fluidischen oder kalorimetrischen Parametern (w), bei dem ein mit einer Meßumgebung (12) in thermischem Kontakt befindliches, heizbares, temperaturempfindliches Sensorelement (13) auf eine höhere Temperatur ($\vartheta_1$, $\vartheta_2$) oberhalb einer Umgebungstemperatur ($\vartheta_0$) der Meßumgebung (12) aufgeheizt und der Parameter (w) aus dem Wärmeübergang zwischen Meßumgebung (12) und Sensorelement (13) bestimmt wird, mit den Merkmalen:

- Das Sensorelement (13) wird vorzugsweise mit einem temperaturabhängigen Heizwiderstand (14) gebildet;
- das Sensorelement (13) ist an eine elektrische Versorgungsquelle (63, 64) angeschlossen;
- an das Sensorelement (13) sind Meßwerterfasser (59, 60, 66, 67) zum Erfassen des den Heizwiderstand (14) durchfließenden Stromes (I) und der am Heizwiderstand (14) abfallenden Spannung (U) angeschlossen;
- die Meßwerterfasser (59, 60) sind mit einem Dividierer (61) verbunden;
- der Dividierer (61) ist an einen Eingang eines Vergleichers (57) angeschlossen;
- ein anderer Eingang des Vergleichers (57) ist über einen Umschalter (54) alternativ mit einem ersten Festwertspeicher (55) oder einem zweiten Festwertspeicher (56) verbindbar;
- der Ausgang des Vergleichers (57) ist mit dem Steuereingang (62) der Versorgungsquelle (63, 64) verbunden;
- die Meßwerterfasser (66, 67) sind mit einem Multiplizierer (68) verbunden;
- der Multiplizierer (68) ist in Abhängigkeit von der Stellung des Umschalters (54) alternativ mit einem ersten Zwischenspeicher (70) oder einem zweiten Zwischenspeicher (71) verbindbar;
- die Zwischenspeicher (70, 71) sind an einen Subtrahierer (72) angeschlossen;
- der Subtrahierer (72) ist über eine Wichtungsstufe (50; 80) mit einem Anzeigegerät (17) verbunden.

FIG.1

FIG.2

FIG.3

FIG.4

FIG.5

FIG.6

FIG.7

EP 0 373 414 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | US-A-4 501 145 (J.-C. BOEGLI et al.) * Zusammenfassung; Ansprüche 1,3; Figuren 1,2 * --- | 1,9 | G 01 F 1/68 G 01 K 7/16 G 01 K 13/02 G 01 P 5/12 |
| A | DE-B-2 906 186 (BATTELLE-INSTITUT E.V.) * Spalte 4, Ansprüche 1,2; Figuren 2 * --- | 1 | |
| A | DE-A-3 543 281 (J. VAILLANT GMBH U. CO.) * Zusammenfassung; Ansprüche 1-4 * ----- | 1 | |
| | | | **RECHERCHIERTE SACHGEBIETE (Int. Cl.5)** G 01 F G 01 K G 01 P |

Der vorliegende Recherchenbericht wurde für alle Patentansprüche erstellt

| Recherchenort | Abschlußdatum der Recherche | Prüfer |
|---|---|---|
| BERLIN | 01-03-1990 | VORROPOULOS G |